# FASCICULE DE BREVET EUROPEEN

(11) **EP 3 957 455 B1**
(45) Date de publication et mention de la délivrance du brevet: **19.04.2023**
(21) Numéro de dépôt: 21202364.2
(22) Date de dépôt: 29.11.2017
(51) Int. Cl.: B29C 43/22, B29C 43/36, B29B 17/00, B29C 43/34, B29K 105/26, B29K 105/06

(54) **INSTALLATION DE FABRICATION D'UN MATERIAU THERMOPLASTIQUE ET SON UTILISATION**
ANLAGE ZUR HERSTELLUNG EINES THERMOPLASTISCHEN MATERIALS UND DESSEN VERWENDUNG
APPARATUS FOR MANUFACTURING A THERMOPLASTIC MATERIAL AND ITS USE

(30) Priorité: 06.12.2016 EP 16306622
(43) Date de publication de la demande: 23.02.2022
(62) Demande divisionnaire de: 17826262.2
(73) Titulaire: Cetim Grand Est, 68200 Mulhouse (FR); Cetim, 60304 Senlis Cedex (FR)
(72) Inventeur: LERAY, Dimitri, 35580 Guignen (FR); RIGEL, David, 68500 Guebwiller (FR); THELIER, Séverine, 67750 Scherwiller (FR); ROUGNON-GLASSON, Olivier, 68700 Uffholtz (FR)
(74) Mandataire: Kessler, Marc

(56) Documents cités:
- WO-A1-01/62464
- FR-A1- 2 640 544
- GB-A- 2 141 376
- US-A- 4 844 766
- US-A1- 2005 238 865
- US-A1- 2015 231 833
- US-A1- 2015 239 004

## Description

### Objet de l'invention

La présente invention se rapporte à une méthode et une installation, ou ligne de fabrication, pour la production d'un matériau plastique, en particulier thermoplastique, de préférence sous la forme de plaques ou de multicouches.

### Etat de la technique

Les matériaux à base d'un polymère plastique, ou d'un mélange de polymères plastiques, en particulier thermoplastique(s), sont employés dans de très nombreux domaines d'activité.

Les polymères thermoplastiques présentent l'avantage, contrairement aux polymères thermodurcissables, de pouvoir être, de manière répétée, ramollis par chauffage et durcis par refroidissement, et, à l'état ramolli, de pouvoir être mis en forme par injection, extrusion, calandrage ou formage par compression-estampage et/ou compression fluage dans un outillage type poinçon-matrice. Cette qualité rend un matériau à base de polymères thermoplastiques potentiellement recyclable.

Sont également connus, des compositions comprenant une matrice à base d'un ou plusieurs polymères thermoplastiques et d'un ou plusieurs composants, généralement appelés renforts, modifiant les propriétés mécaniques du produit final incorporant ces compositions, comme par exemple des fibres naturelles, des fibres de carbone ou de verre, qu'elles soient continues ou discontinues, courtes ou longues, par exemple sous forme de mats, aiguilletés ou non, ou sous forme de textiles, ce qui rend de tels matériaux, dits composites thermoplastiques, moins aisés à recycler.

Les matériaux thermoplastiques et les composites thermoplastiques peuvent se trouver sous différentes formes, par exemple sous la forme de films ou feuilles ayant des épaisseurs comprises entre 0,3 et 0,8 mm, sous forme de stratifiés encore appelés multicouches, ou sous la forme de plaques, ayant généralement des épaisseurs comprises entre 0,9 et 10 mm.

Généralement, les films thermoplastiques sont produits, en continu, à partir d'une composition à l'état ramolli ou fondu, par calandrage, extrusion ou extrusion soufflage.

Les produits multicouches, qui comprennent un ou plusieurs film(s) à base de polymères thermoplastiques, et éventuellement un ou plusieurs renfort(s), sous forme de mats ou de tissus, sont habituellement obtenus par un procédé de calandrage en continu. Néanmoins, comme le décrit le document US2007/0175575, un multicouche composite peut également être produit à l'aide d'une presse de formage, comprenant un moule de compression, pour une consolidation pas à pas, à savoir une consolidation séquentielle d'une partie du produit à la fois.

Pour ce qui concerne les plaques en matériaux thermoplastiques ou en composites thermoplastiques, elles peuvent être produites à partir de fragments thermoplastiques, déposés sur une bande transporteuse, ramollis par l'action de la chaleur, ou dans un moule de compression, avant d'être consolidés et éventuellement mis en forme à l'aide d'une presse chauffante, selon un procédé pas à pas, à savoir dans lequel une partie de la matière première avance d'une station de traitement à une autre, par étapes successives. Néanmoins, il a également été également proposé des procédés en continu mettant en oeuvre des presses à bandes ou une calandre.

Par exemple, le document EP 0 046 526 décrit un procédé de fabrication de plaques thermoplastiques d'une épaisseur d'au moins 10 mm dans lequel les fragments de matières premières thermoplastiques sont déposés sur une bande rouleuse pour former une couche plane de matière première, chauffée par infrarouges, à une température entre 100 et 140°C, puis consolidée en continu dans une presse chauffante à bandes, avant d'être refroidie. De même, le document US 5 145 626 décrit la production en continu d'une plaque en composite thermoplastique, recouverte d'un film polymérique, à l'aide d'une presse chauffante à double bande.

Pour l'obtention de produits moulés à partir de matières premières sous la forme d'un mat de fibres du type textile et de fibres thermoplastiques, le document GB 2 141 376 décrit l'emploi d'une presse comprenant une première série de plateaux, qui chauffe les fibres thermoplastiques jusqu'à un état fondu et qui les presse afin de densifier le mat de fibres, et une seconde série de plateaux refroidissants pour presser à froid le mat de fibres densifié, afin de le rigidifier pour obtenir une plaque. De même, le document US 2005/238865 décrit, pour des matières premières sous forme de fibres de plantes et des fibres plastiques, l'emploi d'abord de micro-ondes pour ramollir, en continu, les matières premières sans l'application de pression, et ensuite d'une presse chauffante pour faire fondre les fibres de plantes ramollies et les fibres thermoplastiques, afin de les lier entre elles, et enfin d'une presse de formage à froid.

Par ailleurs, et même si l'emploi de calandres est réservé à la production de films ou de multicouches thermoplastiques ayant une faible épaisseur, généralement moins de 10 mm, un calandrage en continu a néanmoins également été mis en oeuvre à partir de fragments thermoplastiques, pour la production de plaques de composites thermoplastiques. Par exemple, le document FR 3 007 684 décrit l'obtention d'un composite thermoplastique à partir de composites thermoplastiques à recycler, fragmentés en des fragments de tailles déterminée, qui sont chauffés pour les ramollir voire les fusionner, avant de les ré-agglomérer par calandrage. Toutefois, la mise en oeuvre d'un tel procédé, pour l'obtention de plaques ayant des épaisseurs de plus de 10 mm, implique l'utilisation de calandres particulières, comprenant des cylindres de plus gros diamètre, ce qui rend le procédé en question plus onéreux et plus complexe à mettre en oeuvre.

Par ailleurs, et que ce soit l'emploi d'une calandre, de presses chauffantes à bandes ou de presses de formage pas à pas, les thermoplastiques ou composites thermoplastiques multicouches, sous forme de feuilles, ou sous forme de plaques, présentent l'inconvénient d'être difficiles à homogénéiser, non seulement au travers de leur épaisseur, mais également sur leur longueur et leur largeur, cette inhomogénéité impactant négativement les propriétés mécaniques des produits finaux.

De plus, les lignes de fabrication des produits multicouches thermoplastiques ou composites, qu'elles fonctionnent en continu ou pas à pas, présentent l'inconvénient de ne permettre la production que d'un seul type de multicouches, d'une seule structure de multicouches. Ainsi, la fabrication d'une multitude de produits multicouches différents, de structure différente, nécessite, soit l'utilisation d'une ligne de production dédiée à chaque multicouche, ce qui est onéreux, soit le démontage et l'adaptation d'une ligne existante, ce qui est onéreux et chronophage car nécessitant de nombreuses manipulations.

### Buts de l'invention

La présente invention vise à fournir une installation et une méthode, qui ne présentent pas les inconvénients de l'état de la technique.

La présente invention vise à fournir une alternative aux solutions de l'état de la technique existantes.

La présente invention vise à fournir une installation et une méthode permettant de réduire ou d'éliminer les imperfections ou inhomogénéités des matériaux thermoplastiques ou des composites thermoplastiques.

La présente invention vise à fournir une installation et une méthode, qui sont adaptables, et permettent de produire, de façon peu onéreuse, flexible et aisée, des thermoplastiques ou composites thermoplastiques, sous la forme de plaques et de multicouches, sur une même ligne de production, et permettant la production de produits ayant, sur tout ou partie de leur longueur et/ou leur largeur, une ou des structures et/ou une ou des caractéristiques physiques ou mécaniques différentes.

### Résumé de l'invention

La présente invention porte sur une installation de fabrication d'un produit thermoplastique ou d'un composite thermoplastique, sous la forme d'une plaque et/ou d'un multicouche, d'une longueur indéfinie, comprenant des moyens d'alimentation de matière première comprenant au moins une matière thermoplastique, des moyens de convoyage de ladite matière première, des moyens de pré-consolidation pour l'obtention d'un produit pré-consolidé et des moyens de consolidation pour l'obtention d'un produit consolidé, les moyens de pré-consolidation et les moyens de consolidation fonctionnant pas à pas, de façon séquentielle, dans laquelle les moyens de pré-consolidation compressent la matière première tout en la chauffant à une température inférieure à sa température de fusion, et les moyens de consolidation compressent le produit pré-consolidé, tout en le chauffant à une température supérieure à la température de fusion de la matière première.

Que l'installation selon l'invention comprenne des moyens de pré-consolidation pour l'obtention d'un produit pré-consolidé et des moyens de consolidation pour l'obtention d'un produit consolidé, les moyens de pré-consolidation et les moyens de consolidation fonctionnant pas à pas de façon séquentielle, ou que l'installation comprenne des moyens de pré-consolidation compressant la matière première tout en la chauffant à une température inférieure à sa température de fusion, et des moyens de consolidation compressant le produit pré-consolidé, tout en le chauffant à une température supérieure à la température de fusion de ladite matière première, l'installation peut comprendre en outre des moyens d'alimentation de matière première comprenant un ou plusieurs module(s) amovible(s).

Selon des modes particuliers de l'invention, l'installation de l'invention comprend au moins une, ou une combinaison quelconque appropriée, des caractéristiques suivantes :
- en fonctionnement, l'installation comprend de la matière première se trouvant sous la forme d'une ou plusieurs poudre(s), et/ou un ou plusieurs fragment(s) et/ou d'un ou plusieurs film(s),
- en fonctionnement, l'installation comprend de la matière première comprenant un ou plusieurs matériau(x) thermoplastique(s) et un ou plusieurs matériau(x) de renfort,
- le ou les module(s) amovible(s) est ou sont choisis parmi un module d'alimentation en une ou plusieurs poudre(s), en un ou plusieurs fragment(s), en un ou plusieurs film(s), mat(s) ou tissu(s), et la combinaison de ceux-ci,
- l'installation comprend une pluralité de modules amovibles disposés, les uns par rapport aux autres, en série et/ou en parallèle le long et de part et d'autre des moyens de convoyage,
- le ou les modules d'alimentation d'une ou plusieurs poudre(s), d'un ou plusieurs fragment(s), comprend ou comprennent des moyens d'homogénéisation du lit de la ou des poudre(s), du ou des fragment(s) sur les moyens (3) de convoyage,
- les moyens de pré-consolidation et les moyens de consolidation comprennent des moyens de compression progressive,
- les moyens de pré-consolidation et les moyens de consolidation comprennent, ou sont, des presses à plateau(x).

L'installation selon l'invention est utilisée pour la fabrication d'un produit thermoplastique ou d'un composite thermoplastique sous la forme d'une plaque et/ou d'un multicouche.

La présente invention porte aussi sur une méthode de fabrication d'un produit thermoplastique ou d'un composite thermoplastique, sous la forme d'une plaque et/ou d'un multicouche, comprenant les étapes de fournir une matière première comprenant au moins une matière thermoplastique, de déposer la matière première sur des moyens de convoyage, de pré-consolider pas à pas la matière première en la compressant, tout en la chauffant à une température inférieure à sa température de fusion, pour former un produit pré-consolidé, de consolider pas à pas le produit pré-consolidé, en le compressant, tout en le chauffant à une température supérieure à la température de fusion de ladite matière première, pour former un produit consolidé, la pré-consolidation et la consolidation se faisant de façon séquentielle.

Que la méthode selon l'invention comprenne une étape de pré-consolidation pas à pas de la matière première, pour former un produit pré-consolidé, et une étape de consolidation pas à pas du produit pré-consolidé, pour former un produit consolidé, ou que la méthode comprenne une étape de pré-consolidation pas à pas la matière première en la compressant, tout en la chauffant à une température inférieure à sa température de fusion, pour former un produit pré-consolidé, de consolidation pas à pas du produit pré-consolidé, en le compressant, tout en le chauffant à une température supérieure à la température de fusion de ladite matière première, pour former un produit consolidé, la méthode peut comprendre une étape de dépose de la matière première mettant en oeuvre un ou plusieurs module(s) (6) amovible(s).

Selon des modes particuliers de l'invention, la méthode de l'invention comprend au moins une, ou une combinaison quelconque appropriée, des caractéristiques suivantes :
- la matière première se trouve sous la forme d'une ou plusieurs poudre(s), et/ou un ou plusieurs fragment(s) et/ou d'un ou plusieurs films,
- l'étape de dépose de la matière première sur les moyens de convoyage se fait d'une manière à obtenir un lit homogène,
- l'étape de dépose de la matière première se fait à l'aide d'un ou plusieurs module(s) amovible(s) choisis parmi un module d'alimentation en une ou plusieurs poudre(s), en un ou plusieurs fragment(s), en un ou plusieurs film(s), mat(s) ou tissu(s), et la combinaison de ceux-ci,
- l'étape de pré-consolidation et/ou l'étape de consolidation met en oeuvre une compression progressive,
- l'étape de pré-consolidation et l'étape de consolidation met en oeuvre chacune une presse à plateau(x).

### Brève description des figures

La figure 1 est une vue schématique, en perspective, de l'installation selon l'invention comprenant des moyens d'alimentation en matière première, qui comprennent des modules délivrant des fragments.
La figure 2 est une représentation schématique d'un module délivrant des fragments.
La figure 3 représente une vue schématique, vue du dessous, d'un mode de réalisation particulier des moyens pour obtenir un lit de fragments d'une largeur déterminée.
La figure 4 représente une vue schématique, en perspective, de l'installation selon l'invention comprenant des moyens d'alimentation en matière première, qui comprennent des modules comprenant des bobines de films thermoplastiques et/ou de renfort.
La figure 5 représente une vue schématique, en perspective, de l'installation selon l'invention comprenant des moyens d'alimentation en matière première, qui comprennent un module délivrant des fragments et des modules comprenant des bobines.
La figure 6 représente une vue schématique des moyens de pré-consolidation et des moyens de consolidation de l'installation selon l'invention.

### Description détaillée de l'invention

L'installation 1 selon l'invention comprend des moyens 2 d'alimentation en matière première, qui sont aptes à déposer, sur des moyens 3 de convoyage, au moins une matière thermoplastique, de préférence également au moins un matériau de renfort, quelle que soit sa ou leur forme.

Qu'il s'agisse d'une résine ou d'un mélange de résines thermoplastiques, d'un matériau de renfort ou d'un mélange de matériaux de renfort, d'un matériau thermoplastique ou un composite thermoplastique recyclé ou à recycler, la matière première peut se trouver sous forme d'une ou plusieurs poudres, d'un ou plusieurs fragments, d'un ou plusieurs films ou feuilles, de nature, de dimensions et de formes différentes.

Ainsi, les produits thermoplastiques ou composites thermoplastiques selon l'invention, sous forme de plaques, sont faits à base d'une ou plusieurs poudres, d'un ou plusieurs fragments ou granules, et d'un ou plusieurs renforts, et les multicouches sont faits à base d'au moins un film et un renfort, ou à base d'au moins un film, des fragments, et éventuellement d'un ou plusieurs renforts.

De préférence, et sans être limitatif, la matière première peut comprendre une ou des résines thermoplastiques, vierges ou non, de même nature chimique ou de grades proches, choisie(s) parmi les résines polyoléfines, polyvinyles, polyacryliques, polystyréniques, polyamides, polyesters thermoplastiques et polycarbonates, polyétherimides, polyaryléthercétones, polyétheréthercétones, et les polysulfures de phénylène.

De préférence, et sans être limitatif, le matériau de renfort peut être, ou comprendre, des fragments minéraux ou végétaux, recyclés ou non, des mats de fibres tissées ou non tissées, éventuellement aiguilletés, les fibres pouvant être textiles, naturelles ou synthétiques. Il peut s'agir par exemple de fibres de verre ou de carbone.

Dans un mode de réalisation particulier, la matière première comprend des fragments thermoplastiques ayant une taille, dans n'importe laquelle des dimensions, comprise entre 0,2 et 250 mm, de préférence de 10 à 250 mm, avec avantageusement une épaisseur comprise entre 0,1 à 0,8 mm. Les films ou feuilles de thermoplastiques ont une épaisseur comprise entre 0,2 et 0,8 mm, et les mats et tissus de renfort ont un poids surfacique compris entre 30 à 950 g/m².

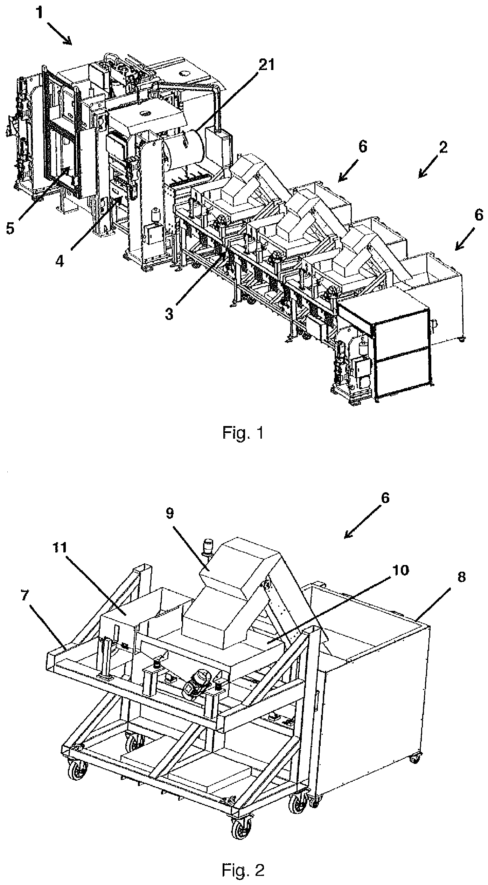

Les moyens 2 d'alimentation en matière première comprennent, ou sont constitués, d'au moins un module 6, de préférence de deux ou trois modules 6, avantageusement de plusieurs modules 6, qui sont de préférence amovibles (figures 1, 2, 4 et 5). Avantageusement, le ou les modules 6 sont mobiles et comprend ou comprennent un châssis 7 monté sur roulettes, pour un déplacement aisé.

Le ou les modules 6 est ou sont disposé(s) à proximité, au dessus et/ou à coté, des moyens 3 de convoyage, afin de déposer sur ces derniers la matière première.

Dans le mode de réalisation comprenant plusieurs modules 6, ces derniers peuvent être disposés en série (figures 1, 4 et 5), ce qui présente l'avantage d'avoir un produit final dont la structure et/ou la composition varie sur tout ou partie de son épaisseur. Ce mode de réalisation permet d'avoir, par exemple, un effet sandwich, avec un coeur à base de résine thermoplastique, plus ou moins épais et de densité ajustable et/ou des mats ou tissus de renfort avec une disposition préférentielle de ces fibres dans le sens longitudinal ou transversal et des mats ou tissus de renfort avec une orientation préférentielle de ces fibres dans le sens longitudinal ou transversal, de part et d'autre de ce coeur. Il est également envisageable d'obtenir un composite thermoplastique avec des fibres de renforts superposées dans le sens longitudinal et transversal, à 45° ou 22,5°, afin d'obtenir une structure avec une résistance mécanique adaptée dans ces quatre directions. Il est également envisageable d'utiliser un ou plusieurs mat(s) ou tissu(s) de renforts entre deux films thermoplastiques pour produire une structure composite avec un effet barrière.

Dans un autre mode de réalisation, les modules 6 peuvent être disposés en série, ce qui présente l'avantage de pouvoir obtenir un produit final dont la structure ou la composition varie sur tout ou partie de son épaisseur. Cela permet, par exemple, d'avoir une résine thermoplastique vierge au-dessus et en dessous d'une résine thermoplastique recyclée qui constituerait le coeur d'une plaque composite.

Dans un autre mode de réalisation, les modules 6 peuvent être disposés en parallèle, ce qui présente l'avantage de pouvoir obtenir un produit final dont la structure ou la composition varie sur tout ou partie de sa largeur. Il serait alors envisageable d'avoir un produit de la largeur de l'installation 1 selon l'invention comprenant plusieurs composites thermoplastiques différents, avant éventuellement une refente à la bonne largeur.

Enfin, dans un autre mode de réalisation, les modules 6 peuvent être disposés pour certains en série et/ou pour certains en parallèle, afin de combiner les avantages de ces arrangements.

Pour la production d'un produit sous la forme d'une plaque, l'installation 1 peut comprendre un module 6, ou une pluralité de modules 6, délivrant des fragments. De préférence, le ou les modules 6 sont amovible(s) et mobile(s), de préférence au nombre de trois, présentent des structures identiques, mais délivrent de la matière première, sous forme de fragments ou de granules, de forme, taille, couleur et/ou composition différentes (figure 1).

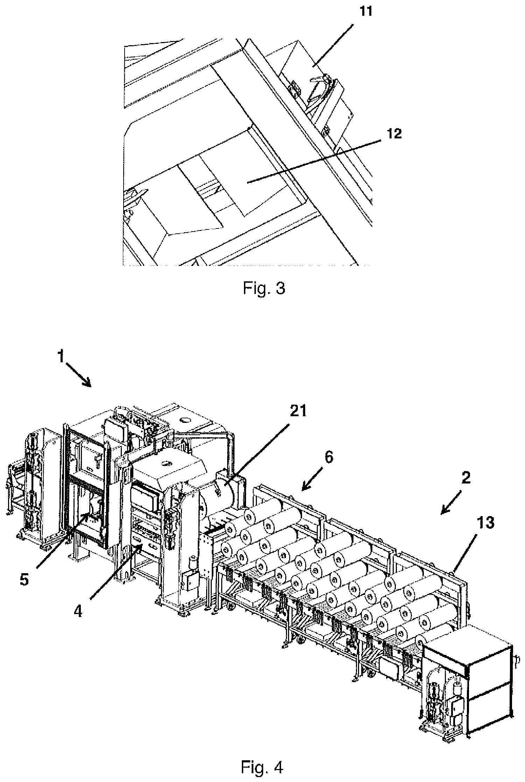

De préférence, le ou les modules 6 délivrant les fragments comprennent des moyens d'homogénéisation du lit de fragments sur les moyens 3 de convoyage. Dans un mode de réalisation particulier de l'invention, le ou les modules 6 comprennent un bac 8 de stockage des fragments, une trémie 9 recevant les fragments et qui est en communication avec une table vibrante 10, elle-même en communication avec une goulotte 11 pour le déversement des fragments sur les moyens 3 de convoyage (figure 2). La table vibrante 10 présente l'avantage d'homogénéiser le lit des fragments sur les moyens 3 de convoyage. La goulotte 11, de préférence réglable, permet d'obtenir une largeur déterminée, réglable, d'un lit homogène de fragments. Dans un mode de réalisation particulier, la largeur réglable du lit est obtenue par l'emploi d'une trappe 12, dans le fond de la goulotte, dont l'ouverture détermine la largeur du lit de fragments (figure 3).

De préférence, la table vibrante 10 vibre dans le plan de la table et/ou dans un plan perpendiculaire au plan formé par la table, et, de préférence, selon une fréquence comprise entre 20 Hz et 55Hz.

De préférence, le ou les modules 6 délivrant des fragments peuvent comprendre des moyens de formation des fragments, et/ou des moyens de tamisage, et/ou des moyens de dosage des fragments de matière première.

Pour la production d'un produit sous la forme d'un multicouche, l'installation 1 peut comprendre un ou plusieurs module(s) 6 amovible(s) et mobile(s), et comprenant un châssis 13 sur lequel est ou sont montés une ou plusieurs bobine(s) 14 d'un ou plusieurs film(s) thermoplastique(s), d'un ou plusieurs film(s) composite(s) ou d'un ou plusieurs matériau(x) de renfort (figure 4).

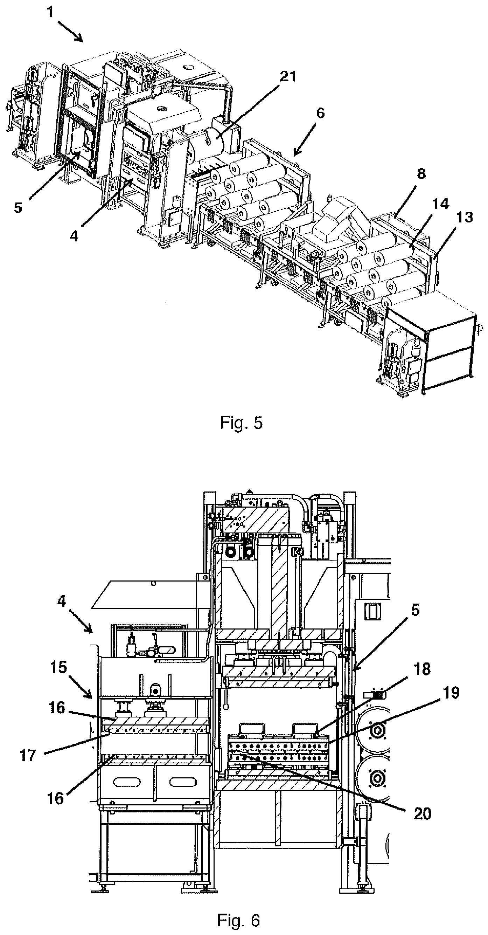

Pour la production d'un produit sous la forme d'un multicouche mixte (figure 5), l'installation 1 peut comprendre un ou plusieurs module(s) 6 amovible(s) et mobile(s), délivrant des fragments et un ou plusieurs module(s) 6 comprenant une ou plusieurs bobine(s) 14 d'un ou plusieurs film(s) thermoplastique(s), d'un ou plusieurs film(s) composite(s) ou d'un ou plusieurs matériau(x) de renfort. Néanmoins, il est également envisageable d'utiliser un ou plusieurs module(s) 6 mixte(s) délivrant à la fois un ou plusieurs type(s) de fragment(s) et un ou plusieurs film(s).

Quels que soient les moyens de consolidation et de pré-consolidation, l'emploi d'un module 6 ou d'une pluralité de modules 6, amovible(s) et de préférence mobile(s), permettant le dépôt d'une matière première différente, en forme et/ou en nature, présente l'avantage de pouvoir agir sur la structure du produit à confectionner, de moduler ses propriétés sur sa largeur et/ou sur sa longueur sans devoir modifier lourdement la ligne de fabrication, ce qui rend l'installation de fabrication qui comprend un ou plusieurs de ces modules 6, en particulier l'installation 1 selon l'invention, aisément adaptable, flexible dans son fonctionnement, pour la production de produits thermoplastiques ou composites thermoplastiques ayant des caractéristiques physiques ou mécaniques différentes.

Que l'installation 1 selon l'invention comprenne, ou non, les moyens 2 d'alimentation en matière première décrits précédemment, et en particulier ceux comprenant, ou étant constitués, d'un ou plusieurs modules 6, l'installation 1 comprend des moyens 3 de convoyage qui comprennent, ou sont, tous moyens adéquats pour transporter la matière première des moyens 2 d'alimentation vers des moyens de pré-consolidation et des moyens de consolidation, de préférence de façon incrémentale, avantageusement à une vitesse ou un pas compatible ou adéquat avec celui ou ceux des moyens 4 de pré-consolidation et des moyens 5 de consolidation. Dans un mode de réalisation particulier de l'invention, il s'agit d'une bande transporteuse.

Quels que soient les modes de réalisation de l'installation 1 selon l'invention, en particulier quels que soient les moyens 2 d'alimentation en matière première, l'installation 1 comprend des moyens 4 de pré-consolidation qui, selon l'invention, réalisent un premier ramollissement et une première compression, dans la direction d'empilement, de la matière première thermoplastique, et pour les composites thermoplastiques, un rapprochement, ou un début d'imprégnation, de la matière première thermoplastique avec le ou les matériaux de renfort, sans application de vide. Ces moyens 4 fonctionnent pas à pas, avantageusement au même rythme que les moyens 5 séquentiels de consolidation, ce qui présente l'avantage de ne pas nécessiter l'emploi de moyens de temporisation ou d'accumulation, entre les moyens 2 d'alimentation en matière première et les moyens 5 séquentiels de consolidation, qui refroidiraient le produit pré-consolidé, ce qui nuirait à l'homogénéité du produit final.

De préférence, les moyens 4 de pré-consolidation chauffent la ou les matière(s) première(s) à une température inférieure, avantageusement inférieure de 10 à 40 degrés Celsius, à la température de fusion de la matière première ou mélange de matières premières, en particulier de la ou des matière(s) thermoplastique(s).

De préférence, les moyens 4 de pré-consolidation appliquent également, sur la ou les matière(s) première(s), une pression comprise entre 0,5 et 5 bars (50 et 500 kPa).

De préférence, les moyens 4 de pré-consolidation effectuent une seule compression à chaud, néanmoins, il est également envisageable d'avoir de multiples compressions successives de la matière première thermoplastique, et donc sans que cette dernière n'avance et ne quitte les moyens 4 de pré-consolidation.

A titre d'exemple, et pour une matière première thermoplastique comprenant des fragments de polyamide 6.6 (PA66), la température de pré-consolidation est comprise entre 140 et 160 degrés Celsius et la pression est comprise entre 0,5 et 1 bar (50 à 100 kPa).

La durée de résidence de la matière première dans les moyens 4 de pré-consolidation peut varier en fonction de la matière première à pré-consolider et de sa forme, fragmentée ou sous la forme de films. A titre d'exemple, cette durée peut s'échelonner entre 2 et 30 secondes et de préférence entre 10 et 25 secondes.

De préférence, la durée du pressage et celle du chauffage sont identiques, mais elles peuvent être différentes.

De préférence, les moyens 4 de pré-consolidation comprennent des moyens de compression progressive, qui présentent l'avantage de permettre de drainer l'air ou les gaz contenus dans le lit de matière première ou générés par la pré-consolidation. De préférence, ces moyens ne font pas appel à du vide.

De préférence, les moyens 4 de pré-consolidation comprennent, ou sont constitués, d'une presse, avantageusement, d'une presse 15 à plateau(x) comprenant au moins un plateau 16, de préférence en inox ou acier poli, venant directement, ou par l'intermédiaire de bandes transporteuses, en contact avec la matière première disposée sur les moyens 3 de convoyage. Avantageusement, la presse 15 comprend au moins deux plateaux 16, un plateau inférieur et un plateau supérieur, pour un chauffage et un pressage de la matière première, de part et d'autre des moyens 3 de convoyage. Dans ce mode de réalisation, un seul des deux plateaux 16 peut être mobile, l'autre étant fixe, ou bien les deux plateaux 16 sont mobiles. De préférence, la surface du ou des plateaux 16 est sensiblement plane et ne comprend pas de texturation.

De préférence, dans ce mode de réalisation les moyens de compression progressive comprennent ou sont constitués par une portion du ou des plateau(x) 16 qui comprend un bord biseauté 17. Avantageusement, le bord biseauté 17 se situe du côté où se fait l'entrée de la matière première afin de chasser l'air ou les gaz au dessus de la matière première, sans qu'il y ait de la matière thermoplastique qui soit entrainée avec l'air ou les gaz, et s'il devait y en avoir, cette dernière se retrouve réemployée dans la matière première à pré-consolider.

De préférence, la matière première est déposée sur deux bandes transporteuses disposées entre les plateaux de la presse, afin d'éviter que la matière première ne colle sur tout ou parties du ou des plateaux de la presse. Il peut également être avantageux de prévoir l'utilisation d'un agent démoulant déposé sur ces bandes transporteuses.

De préférence, les moyens 4 de pré-consolidation sont disposés adjacents à des moyens 5 séquentiels de consolidation (figure 6). Avantageusement, les moyens 4 de pré-consolidation et les moyens 5 séquentiels de consolidation sont disposés au sein d'un même dispositif, ce qui présente l'avantage d'éviter un refroidissement trop important du produit pré-consolidé, impactant négativement l'homogénéité du produit final.

Les moyens 5 séquentiels de consolidation fonctionnent pas à pas, et réalisent la consolidation, par pressages et avancements successifs, du produit pré-consolidé, de préférence en le chauffant à une température supérieure ou égale à la température de fusion de la matière première ou du mélange de matières premières, en particulier de la ou les matières thermoplastiques, de préférence sans application de vide.

De préférence, les moyens 5 séquentiels de consolidation comprennent un profil de température différent entre l'entrée du produit pré-consolidé et la sortie du produit consolidé, pour que le produit pré-consolidé soit chauffé jusqu'à une température supérieure à la température de fusion de la matière première ou mélange de matières premières, en particulier de la ou des matière(s) thermoplastique(s), puis refroidie progressivement jusqu'à une température inférieure à la température de solidification de la matière première ou mélange de matières premières, en particulier de la ou des matière(s) thermoplastique(s). Ainsi, ces moyens 5 séquentiels de consolidation comprennent ou coopèrent avec des moyens de chauffage et de refroidissement.

De préférence, les moyens 5 séquentiels de consolidation appliquent également, et de façon concomitante, sur le produit pré-consolidé, soit une pression fixe, par exemple entre 1 et 35 bars (100 à 3500 kPa), soit un profil ou gradient différent entre l'entrée du produit pré-consolidé et la sortie du produit consolidé.

De préférence, le pas des moyens 5 séquentiels de consolidation est compris entre L/50 et L/2 , L étant la longueur du ou des plateau(x) de la presse dans la direction de progression du produit pré-consolidé à consolider.

A titre d'exemple, et pour un produit pré-consolidé à base de fragments thermoplastiques à base de polyamide (PA66), la température de consolidation est comprise entre 160 et 180 degrés Celsius et la pression appliquée est comprise entre 1 et 35 bars (100 à 3500 kPa).

La durée de résidence du produit pré-consolidé dans les moyens 5 séquentiels de consolidation peut varier en fonction de la matière première du produit pré-consolidé et de sa forme, plaque ou multicouche. A titre d'exemple, cette durée peut s'échelonner entre 2 et 20 minutes et de préférence entre 5 et 10 minutes.

De préférence, la durée du pressage et celle du chauffage sont identiques, mais elles peuvent être différentes.

De préférence, les moyens 5 séquentiels de consolidation comprennent des moyens de compression progressive, qui présentent l'avantage de permettre de drainer l'air ou les gaz contenus dans produit pré-consolidé ou générés par la consolidation. De préférence, ces moyens ne font pas appel à du vide.

De préférence, les moyens 5 séquentiels de consolidation comprennent, ou sont constitués, d'une presse 18, avantageusement, d'une presse à plateau(x) comprenant au moins un plateau 19, de préférence en inox ou acier poli, venant en contact avec le produit pré-consolidé sur la bande transporteuse 3. Avantageusement, la presse 18 comprend au moins deux plateaux 19, un plateau inférieur et un plateau supérieur, pour un chauffage et un pressage du produit pré-consolidé, de part et d'autre de la bande transporteuse 3. Dans ce mode de réalisation, un seul des deux plateaux 19 peut être mobile, l'autre étant fixe, ou bien les deux plateaux 19 peuvent être mobiles. La surface du ou des plateaux 19 est sensiblement plane et peut comprendre, ou pas, une texturation.

De préférence, le plateau supérieur comprend, avantageusement le plateau supérieur et le plateau inférieur comprennent, des zones de températures différentes, de préférence deux, avantageusement trois ou quatre, zones ayant des températures différentes pour une chauffe ou/et un refroidissement progressif(s). Ainsi, le ou les plateaux 19 peuvent comprendre une première zone qui est chaude et une seconde zone qui a une température inférieure à celle de la première zone, voire une zone qui est froide, à savoir qui a une température inférieure à la température ambiante dans laquelle se trouve l'installation 1 et/ou le presse de consolidation selon l'invention. Le ou les plateaux 19 peuvent comprendre tous moyens de chauffage et de réfrigération, de préférence programmables.

Dans un mode particulier de réalisation de l'invention, le plateau supérieur et/ou le plateau inférieur est ou sont monobloc(s) et les zones chaudes et froides sont séparées par une rainure pratiquée sur une partie de leur épaisseur. Cette rainure présente l'avantage de diminuer, voire éviter, un échange calorifique trop important entre la zone chaude et l'autre plus froide.

De préférence, dans ce mode de réalisation les moyens de compression progressive comprennent ou sont constitués par une portion du ou des plateaux 19 qui comprend un bord biseauté 20. Avantageusement, le bord biseauté 20 se situe du côté où se fait l'entrée du produit pré-consolidé afin de chasser l'air ou les gaz au dessus du produit pré-consolidé, sans qu'il y ait de la matière thermoplastique qui soit entraînée avec l'air ou le gaz, et s'il devait y en avoir, cette dernière se retrouve réemployée dans le produit pré-consolidé.

De préférence, une ou plusieurs bandes est ou sont disposée(s) entre le ou les plateau(x) de la presse de consolidation et le produit pré-consolidé durant la consolidation, afin d'éviter que le produit ne colle sur tout ou partie du ou des plateau(x) de la presse, bande sur laquelle un agent démoulant peut être déposé. De préférence, les moyens 5 séquentiels de consolidation partagent ces bandes avec les moyens 4 de pré-consolidation.

Les moyens 5 séquentiels de consolidation, en particulier la presse 18 à plateau(x) selon l'invention, présentent l'avantage de permettre la consolidation d'un produit pré-consolidé à base de fragments, mais également à base de films ou à base de fragments et de films, en permettant l'adhérence de films thermoplastiques entre eux, mais également avec des fragments, tout en procurant une bonne homogénéité au produit final.

Par ailleurs, il est apparu de façon surprenante que l'emploi combiné et séquentiel des moyens 4 de pré-consolidation et des moyens 5 de consolidation permet, de réduire, voire éliminer, dans le produit final, les espaces entre les fragments de matières premières, de chasser les bulles d'air entre les films de matières premières ou entre le ou les film(s) et les fragments, réduisant ainsi la taille et le nombre de pores formés durant la consolidation, procurant ainsi des produits thermoplastiques ou des composites thermoplastiques ayant des propriétés physiques ou mécaniques améliorées. Il a été constaté, que pour une plaque à base de fragments polyamide (PA66), le taux de porosité était inférieur à environ 5%, alors que pour un multicouche ce taux était inférieur à environ 8%, et inférieur à environ 12% pour un composite à base de polyamide (PA66) et du verre comme matériau de renfort.

Les moyens 5 séquentiels de consolidation peuvent également comprendre des moyens de formage pour une mise en forme du produit final en une forme désirée, durant sa consolidation. Par exemple, la presse 18 à plateau(x) de consolidation peut comprendre un ou plusieurs moules de compression. Toutefois, si les moyens 5 séquentiels de consolidation ne comprennent pas de tels moyens de formage, l'installation 1 peut comprendre ces moyens, disposés en sortie des moyens 5 séquentiels de consolidation.

De préférence, l'installation 1 selon l'invention peut comprendre en outre des moyens de régularisation 21 de l'épaisseur du lit de matières premières sur les moyens 3 de convoyage, par exemple une barre de calibrage, une lame ou une raclette.

De préférence, l'installation 1 selon l'invention peut comprendre en outre des moyens d'entraînement, éventuellement également des moyens de contrôle de la vitesse de progression des moyens 3 de convoyage, en particulier de la bande transporteuse 3, et des moyens de contrôle des moyens 2 d'alimentation en matière première.

De préférence, l'installation 1 comprend en outre des moyens de découpe du produit final et éventuellement également des moyens de conditionnement.

La méthode de production d'un produit thermoplastique ou d'un composite thermoplastique, sous la forme d'une plaque ou d'un multicouche, selon l'invention, met en oeuvre de préférence l'installation 1 selon l'invention.

La méthode selon l'invention comprend une étape de fourniture d'une matière première à base d'au moins une matière thermoplastique, de préférence également au moins un matériau de renfort. Avantageusement, il s'agit d'un ou plusieurs matériaux thermoplastiques ou d'un ou plusieurs composites thermoplastiques recyclés ou à recycler. La matière première peut se trouver sous la forme d'un ou plusieurs types de poudre, fragments ou granules, ou d'un ou plusieurs type(s) de films ou feuilles.

De préférence, la fourniture de matière première se fait de façon modulaire, de préférence à l'aide de moyens 2 d'alimentation tels que décrits précédemment, avantageusement par l'emploi d'un ou plusieurs module(s) 6 amovible(s) et de préférence également mobile(s), disposé(s) à proximité, au-dessus et/ou à coté, des moyens 3 de convoyage, les modules 6 pouvant être disposés les uns par rapport aux autres en série et/ou en parallèle. Ainsi, la matière première peut être fournie sous la forme de fragments ou de granules et/ou de films, de forme, de taille, de couleur et/ou de composition différentes, qu'elle soit à base d'une ou plusieurs matière(s) thermoplastique(s), d'un ou plusieurs matériau(x) de renfort, d'un ou plusieurs composite(s) thermoplastique(s) recyclé(s) ou à recycler. Cela présente l'avantage de pouvoir produire des matériaux sous forme de plaques et/ou des multicouches, ayant une structure différente, et donc des propriétés mécaniques différentes, sur tout ou partie de leur largeur et/ou de leur longueur.

La matière première est déposée, sur des moyens 3 de convoyage, par exemple une bande transporteuse, ce dépôt se faisant de préférence d'une manière homogène, en tout état de cause de façon à obtenir un lit homogène, uniforme, de matière première, qu'il s'agisse d'un ou plusieurs types de poudres, fragments ou films.

Ensuite, et quel que soit le mode de fourniture de matière première, et en particulier cette fourniture se fait de façon modulaire comme décrite précédemment, ou non modulaire, la matière première subit, sur les moyens 3 de convoyage, une pré-consolidation pas à pas, séquentielle, d'une partie de la matière première à la fois, avantageusement au même pas ou rythme que la consolidation séquentielle ultérieure. La pré-consolidation s'effectue par ramollissement et compression, dans la direction d'empilement, de la matière première, sous l'action combinée de la chaleur et d'une pression, à l'aide de moyens 4 de pré-consolidation, de préférence tels que décrits précédemment. Le ramollissement se fait, de préférence, par un chauffage à une température inférieure, avantageusement inférieure de 10 à 40 degrés Celsius, à la température de fusion de la matière première, en particulier de la matière thermoplastique, durant 2 à 30 secondes et de préférence entre 10 et 25 secondes, sous une pression comprise entre 0,5 et 5 bars (50 et 500 kPa).

De préférence, la pré-consolidation comprend ou met en oeuvre une compression progressive de la matière première, permettant de drainer l'air ou les gaz contenus dans le lit de matière première ou générés par la pré-consolidation, de préférence, sans faire appel à du vide, mais avantageusement avec les moyens de compression progressive tels que décrits précédemment. De préférence, cette compression progressive se fait dans le sens de la progression de la matière première à partir de l'entrée des moyens 4 de pré-consolidation.

Le produit pré-consolidé subit ensuite une consolidation séquentielle, pas à pas, d'une partie du produit pré-consolidé à la fois, par un pressage à chaud, de préférence à l'aide des moyens 5 de consolidation, tels que décrits précédemment. Avantageusement, la consolidation est réalisée par un chauffage à une température égale ou supérieure, avantageusement supérieure de 20 à 50 degrés Celsius, à la température de fusion de la matière première, en particulier de la matière thermoplastique, durant 2 à 20 minutes et de préférence entre 5 et 10 minutes, à une pression comprise entre 1 et 35 bars (100 à 3500 kPa).

De préférence, la consolidation se fait selon au moins un profil de température, de manière à chauffer le produit pré-consolidé jusqu'à une température supérieure à la température de fusion de la matière thermoplastique, puis à le refroidir progressivement jusqu'à une température inférieure à la température de solidification de la matière thermoplastique. Avantageusement, la consolidation se fait également selon un profil de pression, entre le début et la fin de la consolidation.

De préférence, la consolidation comprend ou met en oeuvre une compression progressive de la matière première, permettant de drainer l'air ou les gaz contenus dans le lit de matière première ou générés par la pré-consolidation, de préférence, sans faire appel à du vide, mais avantageusement avec les moyens de compression progressive tels que décrits précédemment. De préférence, cette compression progressive se fait dans le sens de la progression de la matière première à partir de l'entrée des moyens 4 de pré-consolidation.

De préférence, la consolidation se fait immédiatement après la pré-consolidation, avantageusement sans que le produit pré-consolidé ne refroidisse, encore plus avantageusement sans que le produit ne refroidisse de plus de 50 degrés Celsius.

Dans un mode de réalisation possible de l'invention, la méthode selon l'invention peut également comprendre une étape de formage du produit dans une forme désirée, qui peut être subséquente ou concomitante à l'étape de consolidation et/ou une étape de découpe du produit consolidé.

Les plaques et les multicouches thermoplastiques ou de composites thermoplastiques, confectionnés à l'aide de l'installation 1 selon l'invention, ou selon la méthode selon l'invention, peuvent être utilisés en l'état, ou subir une étape de formage ou d'intégration dans un produit pour la constitution de pièces plus élaborées.

## Revendications

1. Installation (1) de fabrication d'un produit thermoplastique ou d'un composite thermoplastique, sous la forme d'une plaque et/ou d'un multicouche, d'une longueur indéfinie, comprenant des moyens (2) d'alimentation en matière première comprenant au moins une matière thermoplastique, des moyens (3) de convoyage de ladite matière première, des moyens (4) de pré-consolidation pour l'obtention d'un produit pré-consolidé et des moyens (5) de consolidation pour l'obtention d'un produit consolidé, lesdits moyens (4) de pré-consolidation et lesdits moyens (5) de consolidation fonctionnant pas à pas de façon séquentielle, **caractérisée en ce que** les moyens (2) d'alimentation en matière première comprennent un ou plusieurs module(s) (6) amovibles.

2. Installation (1) selon la revendication 1, dans laquelle les moyens (2) d'alimentation en matière première comprennent, en fonctionnement, de la matière première se trouvant sous la forme d'une ou plusieurs poudre(s), et/ou un ou plusieurs fragment(s) et/ou d'un ou plusieurs film(s).

3. Installation (1) selon l'une quelconque des revendications précédente, dans laquelle les moyens (2) d'alimentation en matière première comprennent, en fonctionnement, de la matière première comprenant un ou plusieurs matériau(x) thermoplastique(s) et un ou plusieurs matériau(x) de renfort.

4. Installation (1) selon l'une quelconque des revendications précédentes, dans laquelle le ou les module(s) (6) amovible(s), est ou sont choisis parmi un module (8) d'alimentation en une ou plusieurs poudre(s), en un ou plusieurs fragment(s), en un ou plusieurs film(s), mat(s) ou tissu(s), et la combinaison de ceux-ci.

5. Installation (1) selon l'une quelconque des revendications précédentes, comprenant une pluralité de modules (6) amovibles disposés, les uns par rapport aux autres, en série et/ou en parallèle le long et de part et d'autre des moyens (3) de convoyage.

7. Installation (1) selon l'une quelconque des revendications 2 à 6, dans laquelle le ou les module(s) (6) d'alimentation d'une ou plusieurs poudre(s), d'un ou plusieurs fragment(s), comprend ou comprennent des moyens d'homogénéisation du lit de ladite ou desdites poudre(s), dudit ou desdits fragment(s) sur les moyens (3) de convoyage.

8. Installation (1) selon l'une quelconque des revendications précédentes, dans laquelle les moyens (4) de pré-consolidation, pour l'obtention d'un produit pré-consolidé, réalisent un premier ramollissement de la matière première, en la chauffant à une température inférieure à sa température de fusion et une première compression, et dans laquelle les moyens (5) de consolidation compressent ledit produit pré-consolidé, tout en le chauffant à une température supérieure à la température de fusion de ladite matière première.

9. Installation (1) selon l'une quelconque des revendications précédentes, dans laquelle les moyens (4) de pré-consolidation et les moyens (5) de consolidation comprennent des moyens de compression progressive.

10. Installation (1) selon l'une quelconque des revendications précédentes, dans laquelle les moyens (4) de pré-consolidation et les moyens (5) de consolidation comprennent, ou sont, des presses (15, 18) à plateau(x) (16, 19).

11. Installation (1) selon l'une quelconque des revendications précédentes, dans laquelle les moyens (5) de consolidation comprennent des moyens de formage pour une mise en forme du produit final en une forme désirée.

12. Installation (1) selon l'une quelconque des revendications précédentes, comprenant en outre des moyens de régularisation (21) de l'épaisseur du lit de matière première sur les moyens (3) de convoyage.

13. Utilisation de l'installation (1) selon l'une quelconque des revendications précédentes pour la fabrication d'un produit thermoplastique ou d'un composite thermoplastique sous la forme d'une plaque et/ou d'un multicouche.

## Patentansprüche

1. Anlage (1) zur Herstellung eines thermoplastischen Produkts oder eines thermoplastischen Verbundstoffs in Form einer Platte und/oder eines Mehrschichtgegenstands mit einer nicht definierten Länge, umfassend Mittel (2) zur Versorgung mit Rohmaterial, umfassend mindestens ein thermoplastisches Material, Mittel (3) zum Transport des Rohmaterials, Mittel (4) zur Vorverfestigung zum Erhalt eines vorverfestigten Produkts und Mittel (5) zur Verfestigung zum Erhalt eines verfestigten Produkts, wobei die Mittel (4) zur Vorverfestigung und die Mittel (5) zur Verfestigung Schritt für Schritt auf sequenzielle Weise funktionieren, **dadurch gekennzeichnet, dass** die Mittel (2) zur Versorgung mit Rohmaterial ein oder mehrere entfernbare Module (6) umfassen.

2. Anlage (1) nach Anspruch 1, wobei die Mittel (2) zur Versorgung mit Rohmaterial im Betrieb Rohmaterial umfassen, das die Form eines oder mehrerer Pulver und/oder eines oder mehrerer Fragmente und/oder einer oder mehrerer Folien aufweist.

3. Anlage (1) nach einem der vorhergehenden Ansprüche, wobei die Mittel (2) zur Versorgung mit Rohmaterial im Betrieb Rohmaterial umfassen, umfassend ein oder mehrere thermoplastische Materialien und ein oder mehrere Verstärkungsmaterialien.

4. Anlage (1) nach einem der vorhergehenden Ansprüche, wobei das oder die entfernbaren Module (6) ausgewählt ist oder sind aus einem (8) Modul zur Versorgung mit einem oder mehreren Pulvern, mit einem oder mehreren Fragmenten, mit einer oder mehreren Folien, Matten oder Geweben und der Kombination derselben.

5. Anlage (1) nach einem der vorhergehenden Ansprüche, umfassend eine Vielzahl von entfernbaren Modulen (6), die mit Bezug aufeinander in Reihe und/oder parallel entlang der und auf beiden Seiten der Transportmittel (3) angeordnet sind.

7. Anlage (1) nach einem der Ansprüche 2 bis 6, **dadurch gekennzeichnet, dass**: das oder die Module (6) zur Versorgung mit einem oder mehreren Pulvern, mit einem oder mehrerer Fragmenten Mittel zur Homogenisierung des Betts des oder der Pulver des oder der Fragmente auf den Transportmitteln (3) umfasst.

8. Anlage (1) nach einem der vorhergehenden Ansprüche, wobei die Mittel (4) zur Vorverfestigung zum Erhalt eines vorverfestigten Produkts eine erste Erweichung des Rohmaterials, indem sie es auf eine Temperatur von unter seiner Fusionstemperatur erhitzen, und eine erste Kompression durchführen, und wobei die Mittel (5) zur Verfestigung das vorverfestige Produkt komprimieren und es gleichzeitig auf eine Temperatur über der Fusionstemperatur des Rohmaterials erhitzen.

9. Anlage (1) nach einem der vorhergehenden Ansprüche, wobei die Mittel (4) zur Vorverfestigung und die Mittel (5) zur Verfestigung Mittel zur fortschreitenden Kompression umfassen.

10. Anlage (1) nach einem der vorhergehenden Ansprüche, wobei die Mittel (4) zur Vorverfestigung und die Mittel (5) zur Verfestigung Pressen (15, 18) mit Platte(n) (16, 19) umfassen oder sind.

11. Anlage (1) nach einem der vorhergehenden Ansprüche, wobei die Mittel (5) zur Verfestigung Formungsmittel umfassen, um das Endprodukt in eine gewünschte Form zu bringen.

12. Anlage (1) nach einem der vorhergehenden Ansprüche, umfassend außerdem Mittel zur Regularisierung (21) der Dicke des Betts von Rohmaterial auf den Transportmitteln (3).

13. Verwendung der Anlage (1) nach einem der vorhergehenden Ansprüche zur Herstellung eines thermoplastischen Produkts oder eines thermoplastischen Verbundstoffs in Form einer Platte und/oder eines Mehrschichtgegenstands.

## Claims

1. Installation (1) for manufacturing a thermoplastic product or a thermoplastic composite, in the form of a sheet and/or a multilayer, of undefined length, comprising means (2) for providing a raw material comprising at least one thermoplastic material, means (3) for conveying said raw material, pre-consolidating means (4) to obtain a pre-consolidated product and consolidating means (5) to obtain a consolidated product, said pre-consolidating means (4) and said consolidating means (5) operating sequentially step by step, **characterized in that** the means (2) for providing the raw material comprise one or several removable module(s) (6).

2. Installation (1) according to claim 1, wherein the means (2) for providing the raw material comprise, while operating, raw material in the form of one or several powder(s), and/or one or several fragment(s) and/or one or several film(s).

3. Installation (1) according to any one of the preceding claims, wherein the means (2) for providing the raw material comprise one or several thermoplastic material(s) and one or several reinforcing material(s).

4. Installation (1) according to any one of the preceding claims, wherein the removable module(s) (6) is or are chosen from a module (8) for supplying one or several powder(s), one or several fragment(s), one or several film(s), mat(s) or fabric(s), and the combination thereof.

5. Installation (1) according to any one of the preceding claims, comprising a plurality of removable modules (6) arranged, relative to one another, in series and/or in parallel along and on either side of the conveying means (3).

7. Installation (1) according to any one of claims 2 to 6, wherein the module(s) (6) for supplying one or several powder(s), one or several fragment(s), comprise(s) means for homogenizing the bed of said powder(s), said fragment(s) on the conveying means (3).

8. Installation (1) according to any one of the preceding claims, wherein the pre-consolidating means (4), for obtaining a pre-consolidated product, carry out a first softening of the raw material, by heating it to a temperature below its melting temperature and a first compression, and wherein the consolidating means (5) compress said pre-consolidated product, while heating it to a temperature above the melting temperature of said raw material.

9. Installation (1) according to any one of the preceding claims, wherein the pre-consolidating means (4) and the consolidating means (5) comprise gradual compression means.

10. Installation (1) according to any one of the preceding claims, wherein the pre-consolidating means (4) and the consolidating means (5) comprise, or are, platen (16, 19) presses (15, 18).

11. Installation (1) according to any one of the preceding claims, wherein the consolidating means (5) comprise shaping means to shape the final product into a desired shape.

12. Installation (1) according to any one of the preceding claims, further comprising means (21) for regularizing the thickness of the bed of raw material on the conveying means (3).

13. Use of the installation (1) according to any one of the preceding claims, to manufacture a thermoplastic product or a thermoplastic composite in the form of a sheet and/or a multilayer.
